# EUROPÄISCHE PATENTSCHRIFT

(11) **EP 1 493 948 B1**
(45) Veröffentlichungstag und Bekanntmachung des Hinweises auf die Patenterteilung: **16.11.2011**
(21) Anmeldenummer: 04015073.2
(22) Anmeldetag: 26.06.2004
(51) Int. Cl.: F16H 63/48, F16H 61/12

(54) **Verfahren zur Steuerung einer Parksperre für Kraftfahrzeuge, insbesondere für landwirtschaftliche Nutzfahrzeuge**
Method of controlling a parking brake for motor vehicles, in particular for agricultural utility vehicles
Procédé de commande de frein de stationnement pour véhicules automobiles, en particulier véhicules agricoles

(30) Priorität: 03.07.2003 DE 10330007
(43) Veröffentlichungstag der Anmeldung: 05.01.2005
(73) Patentinhaber: ZF Friedrichshafen AG, 88038 Friedrichshafen (DE)
(72) Erfinder: Schachner, Kurt, 3352 St. Peter/Au (AT); Haas, Werner, 4470 Enns (AT); Kresse, Jürgen, 4400 Steyr (AT)

(56) Entgegenhaltungen:
- DE-A1- 19 804 640
- US-A- 5 370 449
- US-A- 5 696 679
- US-A- 5 704 457

## Beschreibung

Die vorliegende Erfindung betrifft ein Verfahren zur Steuerung einer Parksperre für ein landwirtschaftliches Nutzfahrzeug, mit einem hydrostatisch-mechanischen Leistungsverzweigungsgetriebe, nach dem Oberbegriff des Anspruchs 1.

Nach dem Stand der Technik umfassen derartige Fahrzeuge meistens hydrostatisch-mechanische Leistungsverzweigungsgetriebe, welche aus einem stufenlos verstellbaren Hydrostatgetriebe mit einer volumenverstellbaren und einer volumenkonstanten Einheit, einem Summierungsgetriebe und einem Bereichsgetriebe mit mehreren schaltbaren Gängen bestehen.

In derartigen Getrieben ist nach dem Stand der Technik eine Parksperre vorgesehen, welche vorrangig eine Sicherheitsfunktion hat. Da der Fahrer die Möglichkeit hat, während der Stillstandsregelung das Fahrzeug zu verlassen, muss für den Fall eines Elektrik- oder Hydraulikausfalls ein Wegrollen des Fahrzeugs mechanisch verhindert werden. Des weiteren wird durch das automatische Einlegen der Parksperre nach einer bestimmten Zeit bei stehendem Traktor der Hydrostat entlastet. Außerdem kann die Parksperre zum Absichern des Fahrzeuges verwenden werden.

Hierbei handelt es sich bei dem meisten Parksperrensystemen um bistabile Systeme. Dies bedeutet, dass bei Druckabfall oder Spannungsausfall (Systemausfall elektrisch oder hydraulisch, Zündung aus oder Absterben des Motors) der Parksperrenzustand beibehalten wird. Dies ist ein entscheidender Vorteil gegenüber monostabilen Systemen, bei denen die Parksperre hydraulisch ausgerückt und über Federdruck eingelegt wird.

Parksperren werden üblicherweise mit einer Sperrklinke, wie es z.B. in der gattungsgemäßen DE 101 19 268 der Anmelderin beschrieben ist, ausgeführt; es sind aber auch Lösungen bekannt, bei denen bereits vorhandene Feststellbremsen (reibschlüssige Bremsen) mit Federspeichern verwendet werden.

Nach dem Stand der Technik wird nach dem Einrückvorgang der Parksperre nicht überprüft, ob die Parksperre tatsächlich eingelegt wurde. So kann es in nachteiliger Weise dazu kommen, dass das Fahrzeug eine eingelegte Parksperre anzeigt und auf Neutral schaltet. Andererseits kann es vorkommen, dass bei notentriegelter Parksperre eine unbestimmte Zeit lang versucht wird, die Parksperre wiederholt einzulegen, wodurch das Fahrzeug einen beträchtlichen Weg zurücklegen kann.

Der vorliegenden Erfindung liegt die Aufgabe zugrunde, ein Verfahren zur Steuerung einer Parksperre für landwirtschaftliche Nutzfahrzeuge, welche ein hydrostatisch-mechanisches Leistungsverzweigungsgetriebe umfassen, anzugeben, welches ein sicheres Ein- und Ausrücken der Parksperre gewährleistet und für den Fall des Nichteinrückens Ersatzmaßnahmen einleitet. Zudem soll eine Überprüfung des sicheren Eingerücktseins der Parksperre gewährleistet werden.

Diese Aufgabe wird durch die Merkmale des Patentanspruchs 1 gelöst. Weitere Ausgestaltungen und Vorteile gehen aus den Unteransprüchen hervor.

Demnach wird vorgeschlagen, dass nach dem Einlegen der Parksperre (Position P) überprüft wird, ob die Parksperre tatsächlich eingelegt ist, wobei, wenn die Parksperre nicht eingelegt ist, das Fahrzeug in Stillstands regelung bleibt und der Fahrer optisch und/oder akustisch informiert wird.

Gemäß der Erfindung erfolgt die Überprüfung des Einrückvorgangs durch Verdrehen des Abtriebs mit einer definierten Last- bzw. Abtriebsmomentänderung in beiden Richtungen, wobei, wenn die Last nicht aufgebaut wird, ein Schwellenwert für den dabei zurückgelegten Weg überschritten wird oder wenn eine definierte Zeitschwelle überschritten wird, der Vorgang abgebrochen wird und ein Fehler beim Einrücken der Parksperre erkannt wird.

Des weiteren wird vorgeschlagen, dass, wenn trotz eingelegter Parksperre eine Abtriebszahl festgestellt wird, ein erneuter Einrückvorgang gestartet wird.

Die Parksperrenansteuerung erfolgt durch den Getriebe-Regler, welcher die Anforderung zum Einlegen bzw. Ausrücken der Parksperre vom Fahrzeug-Motor-Getriebe-Regler (FMGR) erhält, wobei nach dem Einlegen der Parksperre eine aktuell geschlossene Richtungskupplung geöffnet und der Allradantrieb unabhängig von der Allrad-Schalterstellung geschaltet wird.

Das Einlegen der Parksperre erfolgt bei einer geschlossenen Richtungskupplung, um eine Last am Abtrieb (Klinkenrad) einstellen zu können. Nach erfolgtem Ausrücken der Parksperre wird der Allradantrieb entsprechend der Schalterstellung eingestellt.

Eine Betätigung des Parksperrentasters für die Parksperre bewirkt ein sofortiges Einlegen der Parksperre, sofern die Geschwindigkeit des Fahrzeugs unter einer Grenzgeschwindigkeit liegt, wobei der Parksperrentaster bereits beim Ausrollen des Fahrzeuges betätigt werden kann.

Das Verfahren kann sowohl bei Parksperren mit einer Sperrklinke als auch bei Parksperren mit einer reibschlüssigen Bremse angewandt werden.

Die Erfindung wird im folgenden anhand der beigefügten Figuren, anhand einer Parksperre, welche eine Sperrklinke umfasst, beispielhaft näher erläutert.
Es zeigen:
- Fig. 1: eine schematische Ansicht der Komponenten, die für das erfindungsgemäße Verfahren benötigt werden;
- Fig. 2: eine Darstellung der beim Überprüfen des Zustandes der Parksperre angelegten Last als Funktion der Zeit und
- Fig. 3: eine Blockdarstellung des Einrückvorgangs einer Parksperre mit Sperrklinke gemäß der vorliegenden Erfindung.

Bei Parksperrensystemen mit Sperrklinke wird das Fahrzeug gehalten, indem eine Schaltklinke in eine Lücke am Klinkenrad eintaucht. Dieses Klinkenrad befindet sich am Getriebeausgang. Hierbei wird die Klinke durch eine Rolle über einen Kniehebel in die Lücke gedrückt, bis es zu einer Über-Totpunkt-Stellung von Kniehebel und Klinke kommt. Daraus ergibt sich, dass beim Einrückvorgang der Abtrieb soweit bewegt werden muss, dass einerseits eine mögliche Klinke-auf-Zahn-Stellung aufgehoben wird und andererseits das sichere Einrücken überprüft wird. Das Ausrücken der Klinke erfolgt durch eine Feder.

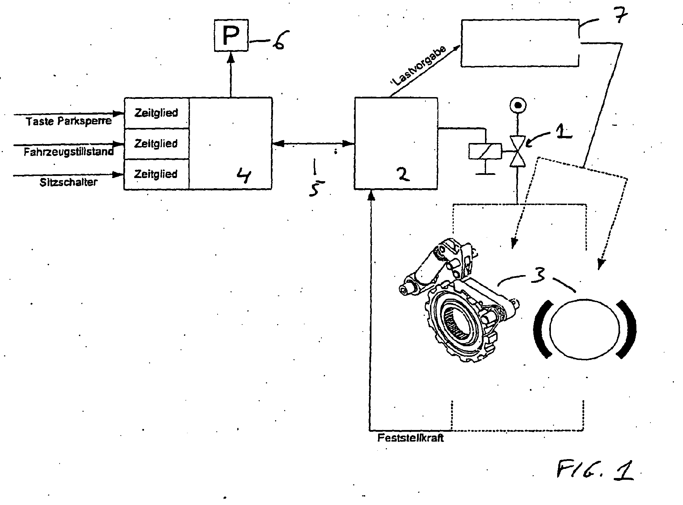

Der Kniehebel wird durch ein 4-3-Wege-Parksperrenventil bewegt. Dieses Ventil hat drei Positionen: "Parksperre ein", "Parksperre aus" und die Mittelstellung sowie vier Wege: "Parksperre ein", "Parksperre aus", 30-Bar-Kreis, und Tank. Das Parksperrenventil ist in Fig. 1 mit dem Bezugszeichen 1 versehen.

Die Ansteuerung des 4-3-Wege-Ventils erfolgt über ein Pulsweitenmoduliertes Signal (PWM-Signal) über die PWM-Ausgänge PSE ("Parksperre ein") und PSA ("Parksperre aus") am Getriebe-Regler 2. Die Steuerungslogik im Getriebe-Regler 2 schaltet nicht nur das Ventil 1, sondern muss für den Ein- und Ausrückvorgang den Hydrostaten und die Richtungskupplungen KV (Vorwärtskupplung) und KR (Rückwärtskupplung) des Getriebes 7 entsprechend steuern. Zudem wird vom Getriebe-Regler festgestellt, ob die Parksperre 3 sicher eingerückt ist.

Die Anforderung zum Einlegen bzw. Ausrücken der Parksperre 3 erhält der Getriebe-Regler 2 vom Fahrzeug-Motor-Getriebe-Regler (FMGR) 4. Diese Information und die Rückmeldung des Getriebe-Reglers 2 werden über den CAN-Bus 5 übertragen.

Beim Einlegen der Parksperre gibt der Fahrzeug-Motor-Getriebe-Regler FMGR unabhängig von der AWD-(All Wheel Drive) Schalterstellung dem Getrieberegler vor, das Schaltventil der Allradkupplung auszuschalten, so dass der Allradantrieb eingeschaltet wird.

Die Eingangssignale für die Steuerungslogik im Fahrzeug-Motor-Getriebe-Regler FMGR 4 werden von unterschiedlichen Tastern, Schaltern bzw. Pedale erzeugt, wie z. B. von dem Sitzschalter, dem Lenksäulenschalter für die Stellungen V, N und R, dem Parksperren-Taster, dem Fahrpedal, dem Kupplungspedal und der Betriebs- und Handbremse.

Gemäß der Erfindung ist ein Display 6 vorgesehen, was bevorzugterweise in der rechten A-Säule angeordnet ist, welches dem Fahrer den Zustand des Fahrzeuges und damit des Parksperrensystems anzeigt. Hierbei sind folgende Bezeichnungen von Bedeutung:
"P" Parksperre eingelegt, Räder sind blockiert (alle vier, da der Allradantrieb zugeschaltet ist) und
"N" Antriebsstrang ohne Kraftschluss, Fahrzeug kann wegrollen.

Um den Einrückvorgang der Parksperre zu starten, wird von dem FMGR 4 an den Getriebe-Regler 2 über den CAN-Bus 5 ein Signal zum Einlegen der Parksperre 3 übermittelt. Nach erfolgtem Einlegen der Parksperre 3, was als Signal (Flag) dem FMGR 4 mitgeteilt wird, gibt der FMGR dann die Anweisung, eine aktuell geschlossene Richtungskupplung zu öffnen, und den Allradantrieb zu schalten, unabhängig von der Allrad-Schalterstellung.

Um den Ausrückvorgang der Parksperre zu starten, wird von dem FMGR 4 an den Getriebe-Regler 2 über den CAN-Bus 5 ein Signal zum Ausrücken der Parksperre 3 übermittelt. Gemäß einer ersten Variante der Erfindung kann vom Getriebe-Regler die Parksperre bei geöffneten Richtungskupplungen, also in der N-Position, herausgenommen werden, z.B. bei Betätigung des Kupplungspedals. Alternativ dazu kann vor dem Ausrücken der Parksperre eine Richtungskupplung (KV oder KR) eingelegt werden. Das erfolgte Ausrücken der Parksperre wird vom Getriebe-Regler an den FMGR übermittelt. Nach erfolgtem Ausrücken der Sperre wird der Allradantrieb entsprechend der Schalterstellung eingestellt.

Eine positive Flanke am Parksperrentaster oder an einer Betätigungseinrichtung für die Parksperre bewirkt ein sofortiges Einlegen der Parksperre, sofern die Geschwindigkeit des Fahrzeugs unter einer Grenzgeschwindigkeit liegt. Ein typischer Wert für die Grenzgeschwindigkeit beträgt ca. 0,25 km/h oder nAb < 25 U/min. Herbei kann der Taster bereits beim Ausrollen des Fahrzeuges (Fahrzeuggeschwindigkeit ist kleiner gleich 3 km/h) betätigt werden. Es ist auch möglich, aus der Position "N" die Parksperre einzulegen, aber nur dann, wenn die Geschwindigkeit des Fahrzeugs kleiner als etwa 0,25 km/h ist. Sollte in diesem Fall die Fahrzeuggeschwindigkeit steigen oder das Kupplungspedal betätigt werden, wird der Einrückvorgang abgebrochen.

Gemäß der Erfindung wird, wenn sich das Fahrzeug unterhalb der Grenzgeschwindigkeit bewegt, nach einer vorbestimmten Zeit, vorzugsweise 5s, die Parksperre eingelegt, wenn sich der Fahrer vom Sitz erhebt. Der Fahrer kann auch ohne Sitzschaltersignal das Fahrzeug bewegen, die Maximalgeschwindigkeit wird jedoch auf ca. 2 km/h begrenzt. Wenn der Sitz wieder belastet ist, wird durch Loslassen des Fahrpedals die Geschwindigkeitsbegrenzung aufgehoben.

Wenn die Parksperre eingelegt ist, so wird bei Vorwahl "V" oder Vorwahl "R" die jeweilige Richtungskupplung eingelegt und die Pärksperre ausgerückt.

Wird während des Einrückvorgangs der Parksperre aus "V1" oder "R1" das Fahrpedal betätigt, so wird dieser unterbrochen, die Parksperre sofort ausgerückt und das Fahrzeug beschleunigt.

Wird das Kupplungspedal bei eingelegter Parksperre oder während des Einrückvorganges über ca. 90 % des Pedalwegs betätigt, so wird die Parksperre erfindungsgemäß ausgerückt. Unterschreitet der Pedalweg wieder ca. 85 %, so wird die Parksperre wieder eingelegt, sofern sich das Fahrzeug nicht bewegt oder die Grenzgeschwindigkeit nicht überschreitet (Grenze liegt bei ca. 0,25 km/h). Bewegt sich das Fahrzeug (= Wegrollen), so wird die entsprechende Richtungskupplung einsynchronisiert, so dass das Fahrzeug über das Fahrpedal in diese Richtung sofort beschleunigbar ist. Wird bei durchgedrücktem Kupplungspedal der N-Taster für eine Sekunde betätigt, so wird das Fahrzeug dauerhaft auf "N" geschaltet, wodurch die Parksperre dauerhaft ausgerückt bleibt. Der FMGR rechnet die Fahrzeuggeschwindigkeit aus der Getriebe-Abtriebsdrehzahl über die Hinterachsübersetzung und den Reifenabrollumfang aus, wobei die Getriebe-Abtriebsdrehzahl über den CAN-Bus vom Getriebe-Regler übermittelt wird.

Wird die Parksperre über den Parksperrenschalter aus "N" heraus eingelegt, so bewirkt die Betätigung des Kupplungspedals einen Abbruch des Einrückvorgangs. Das Fahrzeug bleibt hierbei in der Position "N".

Gemäß der Erfindung bewirkt eine Bremsbetätigung ein Rücksetzen eines Zählers, welcher bei Stillstandsregelung nach Ablauf einer bestimmten Zeit (ein typischer Wert ist 45 Sekunden) ein automatisches Einrücken der Parksperre einleitet. Wird die Betriebsbremse während eines "P" → "N" → "P"-Überganges betätigt, so wird der Einrückvorgang lediglich angehalten - das Fahrzeug befindet sich in Stillstandsregelung ohne Anfahrmöglichkeit. Beim Verlassen des Bremspedals fordert der FMGR unverzüglich ein Einrücken der Parksperre an.

Die Steuerungslogik der Parksperre ist im FMGR vorzugsweise als State-Maschine aufgebaut, wobei zwischen 8 States (Zuständen) unterschieden wird:

### State 0 (Initialisierung):

In diesen Zustand gelangt man immer nach "Zündung ein". Hier werden diverse Variablen initialisiert und es erfolgt ein Übergang in State 6 (Neutral).

### State 1 (Parksperre ist eingelegt):

Wurde die Parksperre durch den Parksperrentaster eingelegt, so wird die Einlegeanforderung zurückgesetzt. Wenn der Fahrer V oder R vorwählt, so wird dem Getriebe-Regler mitgeteilt, dass die Parksperre auszurücken ist. Es erfolgt ein Übergang in State 2 (Parksperre wird ausgerückt). Bestätigt, wie bereits erläutert, der Fahrer im State 1 das Kupplungspedal über 90 %, so wird ebenfalls dem Getriebe-Regler die Ausrückanforderung mitgeteilt, wobei ein Übergang in State 7 (Neutral aus "P") erfolgt.

Meldet der Getriebe-Regler, dass die Parksperre nicht eingelegt ist, z. B. wie bereits erläutert durch Erkennen einer Abtriebsdrehzahl größer als die der Grenzgeschwindigkeit entsprechenden, so wird die der Bewegungsrichtung entsprechende Vorwahl (KV oder KR) getroffen und in State 4 (Keine Stillstandsregelung) übergegangen. Dabei wird ein Fehlerflag gesetzt, das einen erneuten Parksperre-Einrückvorgang bei Stillstand des Fahrzeuges bewirkt.

### State 2 (Parksperre wird ausgerückt):

Wenn vom Getriebe-Regler die Rückmeldung kommt, dass die Parksperre ausgerückt ist, so wird in State 3 (Stillstandsregelung) übergegangen. Wird im State 2 das Kupplungspedal betätigt, so kommt es zu einem Übergang in State 6 (Neutral).

### State 3 (Stillstandsregelung):

In diesem Zustand läuft ein Zähler, der nach einer vorbestimmten Zeit, typischerweise 45 Sekunden, bewirkt, dass der Getriebe-Regler die Einrückanforderung erhält und ein Übergang in State 5 (Parksperre wird eingelegt) erfolgt. Wird während des Hochzählens die Stillstandsregelung verlassen oder die Betriebsbremse betätigt oder mit dem Lenksäulenschalter neu vorgewählt (auch in der gleichen Richtung) oder läuft gerade die Motorkalibrierung, so wird der Zähler wieder auf Null gesetzt. Für die Betriebsbremse gilt dies nur, wenn nicht gleichzeitig die Anforderung besteht, die Parksperre sofort einzulegen.

Durch eine ca. 5 Sekunden lang andauernde Fahrersitzentlastung (Sitzschalter) oder durch eine Parksperrentasterbetätigung erfolgt ebenfalls der Übergang in State 5 (Parksperre wird eingelegt). Zum Verlassen der Stillstandsregelung kommt es entweder durch Anfahren - dies bedeutet einen Übergang in State 4 (Keine Stillstandsregelung) - oder durch Betätigen des Kupplungspedals mit Übergang in State 6 (Neutral) bzw. State 7 (Neutral aus "P"). Der Übergang in State 7 ergibt sich, wenn die Anforderung die Parksperre sofort einzulegen gegeben ist.

### State 4 (Keine Stillstandsregelung):

Auch hier wird wie im State 3 der Zähler für die Parkwartezeit durch Betätigen der Betriebsbremse, durch neuerliche Vorwahl oder durch Motorkalibrierung auf Null gesetzt. Die Anforderung der Stillstandsregelung, ein sofortiges Einrücken, ein betätigter Parksperrtaster und das Sitz Timeout bewirken unterhalb der Grenzgeschwindigkeit einen Übergang in State 3 (Stillstandsregelung). Wird das Kupplungspedal über 90 % betätigt, so kommt es zu einem Übergang in State 6 (Neutral) bzw. State 7 (Neutral aus "P").

### State 5 (Parksperre wird eingelegt):

Wenn in diesem Zustand die Rückmeldung des Getriebe-Reglers kommt, dass die Parksperre eingerückt ist, so gibt der FMGR die Anweisung zu trennen und es erfolgt ein Übergang in State 1 (Parksperre ist eingelegt). Wird im State 5 das Kupplungspedal über 90 % betätigt (Fahrer muss sitzen), so erhält der Getrieberegler die Anweisung, die Parksperre wieder auszurücken und es erfolgt ein Übergang in State 2, wenn nicht vorher State 7 (Neutral aus "P") aktiv war. Der Getrieberegler muss die Parksperre ebenfalls wieder ausrücken, wenn entweder die zulässige Zeit (ca. 15 Sekunden) für eine Rückmeldung des erfolgreichen Einrückens überschritten wurde, oder das Fahrpedal oder das Kupplungspedal oder die Betriebsbremse betätigt wird. Es erfolgt ein Übergang in State 4 (keine Stillstandsregelung).

Während das Kupplungspedal nur das Einrücken anhält, bewirken Bremse und Fahrpedal einen Neustart des Zählers. Eine Betätigung des Fahrpedals bewirkt allerdings nur dann ein Ausrücken der Parksperre und ein Anfahren, wenn, wie bereits erläutert, der Einrückvorgang aus "V1" oder "R1", nicht aber aus "P" gestartet wird. Es muss zwar auch beim Einrücken aus "P" die zweite Kupplung (KV) eingelegt werden, die Sollbeschleunigung wird allerdings auf Null gesetzt. Dadurch dreht der Motor hoch, das Getriebe wird aber nur durch den Getriebe-Regler verstellt.

### State 6 (Neutral):

Eine Vorwahl durch den Fahrer bewirkt einen Übergang in State 4 (Keine Stillstandsregelung). Wird der Parksperrentaster betätigt, so erfolgt ein Übergang in State 8 (Aus Neutral Parksperre einlegen).

### State 7 (Neutral aus "P"):

Beim Verlassen des Kupplungspedals (Pedalweg kleiner 85 %) muss die Parksperre unverzüglich wieder eingelegt werden. Ein Anfahren wird aber trotz eingelegter KV verhindert. Erfolgt in State 7 allerdings eine Vorwahl des Fahrers über den Lenksäulenschalter (V/R), oder bewegt sich das Fahrzeug (Wegrollen), so wird das Anfahren zugelassen. In jedem Fall kommt es zum Übergang in State 4 (keine Stillstandsregelung). Wird in State 7 der Lenksäulenschalter gedrückt (mehr als eine Sekunde), so erfolgt der Übergang in State 6 (Neutral).

### State 8 (Aus Neutral Parksperre einlegen):

Wenn sich das Fahrzeug bewegt (rollt) oder der Fahrer das Kupplungspedal betätigt, dann wird in State 6 (Neutral) übergegangen, d.h. der Einlegewunsch (über den Parksperrentasteraster) wird ignoriert. Ansonsten erfolgt ein Übergang in State 7 (Neutral aus "P").

Wenn die Parksperre entweder eingelegt ist oder der FMGR beim Ausrückvorgang noch keine Rückmeldung vom Getriebe-Regler hat, wird auf der Display-Anzeige P angezeigt.

Im State 7 (Neutral aus "P") kann ein Flag gesetzt werden, welches bewirkt, dass der Zähler bei gesetztem Flag als abgelaufen gilt. Dadurch wird die Parksperre sofort eingelegt. Dieses Flag wird in State 1 (Parksperre ist eingelegt) oder bei Vorwahl durch den Fahrer rückgesetzt. In State 3 (Stillstandsregelung) bzw. 4 (keine Stillstandsregelung) wird damit einerseits verhindert, dass die Betriebsbremse den Zähler neu startet, und andererseits, dass erkannt wird, ob der State 7 (Neutral aus "P") vorher aktiv war. Ob die State-Maschine über State 7 gelaufen ist, ist auch für State 5 (Parksperre wird eingelegt) relevant.

Wenn in State 5 (Parksperre wird eingelegt) die Rückmeldung vom Getriebe-Regler kommt, dass die Parksperre eingerückt ist, wird ein entsprechendes Flag gesetzt. Damit wird erkannt, dass die bestehende Fahrervorwahl (V/R) aufzuheben ist, da der FMGR die Anforderung zum Trennen geben muss. Das Flag wird bei neuerlicher Vorwahl oder im State 1 (Parksperre ist eingelegt) bei Fehlerdiagnose (und anschließendem Einsynchronisieren) oder im State 7 (Neutral aus "P") zurückgesetzt.

Beim Übergang "P" → "N" → "P" muss zum Einlegen der Parksperre die Kupplung KV eingelegt werden. Ein Anfahren darf nicht möglich sein im Gegensatz zu einer Veränderung der Motordrehzahl über das Fahrpedal. Wenn ein Flag zum sofortigen Einrückender Parksperre gesetzt ist und State größer als drei ist, so wird ein Flag gesetzt, welches Stillstandsregelung ohne Anfahrmöglichkeit bewirkt. Die Beschleunigung (aSoll) wird dadurch auf Null gesetzt.

Hat der FMGR bei Zündung aus keine Rückmeldung vom Getriebe-Regler über ein gesichertes Einrücken der Parksperre, so schaltet sich der FMGR und damit das Display nicht ab. Das Display weist den Fahrer gemäß der Erfindung optisch und akustisch darauf hin, dass die Parksperre nicht eingelegt ist und er die Handbremse anziehen muss. Der Nachlauf des FMGR und des Displays wird beendet, sobald das Handbremssignal anliegt oder die Parksperre eingelegt ist. Ignoriert der Fahrer die Display-Warnungen, so schaltet sich der FMGR 10 Sekunden nach Verlassen des Fahrzeuges (Sitzschalter) ab. Bei Neustart des Fahrzeuges wird unabhängig vom Parksperrenzustand "N" angezeigt.

Die Steuerungslogik für die Parksperre im Getriebe-Regler besteht aus dem Initialisierungsteil und den vier Zuständen "Einrücken", "Eingerückt", "Ausrücken" und "Ausgerückt". Die Unterscheidung, in welchem Zustand sich der Getriebe-Regler befindet, wird durch entsprechende Flags gemacht; es gibt keine Sensorik, mit der dem Getriebe-Regler direkt die Position der Parksperrenklinke mitgeteilt wird.

Der Getriebe-Regler erhält, wie bereits erläutert, über den CAN-Bus vom FMGR die Anforderungen für Parksperre-Ein- bzw. -Ausrücken, Trennen bzw. Kupplung-Einlegen, usw., wobei Ein- und Ausrückzeit der Parksperre temperaturabhängig berechnet werden.

Aus der Hydrostatdrehzahl, der Motordrehzahl und der Ansteuerung des Hydrostats wird die Last- bzw. der Hochdruck berechnet. Aus der Änderung des Hochdrucks wird beim Einrückvorgang (Schwenk des Abtriebs in beiden Richtungen) das sichere Einrücken überprüft. An der Abtriebsdrehzahl wird erfindungsgemäß erkannt, ob die Schwenkbewegung zu weit geführt hat.

Das Parksperrenventil, welches den Kniehebel bewegt, hat die Positionen "Parksperre ein", "Parksperre aus" und die Mittelstellung. Beide Spulen des Ventils werden beim Einschalten zuerst mit voller Batteriespannung angesteuert, anschließend wird die Pulsweite reduziert, so dass im Mittel die Nennspannung der Ventilspule eingestellt wird. Ein Bestromen des Ausgangs PSE (= Parksperre Ein) (PWM-Signal) bewegt den Kniehebel in die Stellung "Parksperre ein". Nachdem das System "verkniet" ist, muss die Spule nicht mehr bestromt werden. Durch das PWM-Signal am Ausgang PSA (= Parksperre Aus) wird der Kniehebel in die Stellung "Parksperre aus" bewegt, wobei der PSA-Ausgang erst beim Start des nächsten Einrückvorganges wieder ausgeschaltet wird. Eine fehlerhafte Bestromung des PSE-Ausgangs (z. B.: Endstufe defekt) führt damit zu keinem ungewollten Einrücken der Parksperre.

Nach dem gesicherten Einrücken der Parksperre muss entweder die Kupplung KV oder die Kupplung KR geöffnet werden. Bevor die Parksperre ausgerückt wird, muss die Richtungskupplung eingelegt sein. Bei Betätigung des Kupplungspedals wird erfindungsgemäß keine Richtungskupplung eingelegt.

Um beim Einrückvorgang eine mögliche Klinke auf Zahn-Stellung aufzuheben bzw. um das Verriegeln zu überprüfen, wird der Abtrieb bewegt. Dies geschieht durch Vorgabe einer Verstellung des Hydrostaten durch Ansteuerung (des Schrittmotors) mit einem PWM-Signal.

Nach Zündung ein wird in der Parksperrenlogik des Getriebe-Reglers der Initialisierungsteil durchlaufen. Hierbei ist der Parksperrenzustand nicht im Getriebe-Regler gespeichert.

Ist die Parksperre ausgerückt und gibt der FMGR die Anweisung zum Einlegen, so wird der Einrückvorgang gestartet. Die Einrückzeit wird hierbei entsprechend temperaturabhängig berechnet. Während des gesamten Ablaufes wird ein Zähler hochgezählt, der am Ende jeder Phase für die nächste Phase initialisiert wird.

In einer ersten Phase wird die Parksperre angesteuert (PSE), der Bereich ("V" oder "R"), die Last, der Hochdruck, die Steigung oder das Gefälle abgespeichert und die Fehlerauswertung und die Integration der Abtriebsdrehzahl initialisiert. Ist die Einrückzeit abgelaufen, so wird der Schwenk gestartet. Die Klinke ist entweder eingerückt oder liegt unter Druck am Kopfkreis des Klinkenrades an.

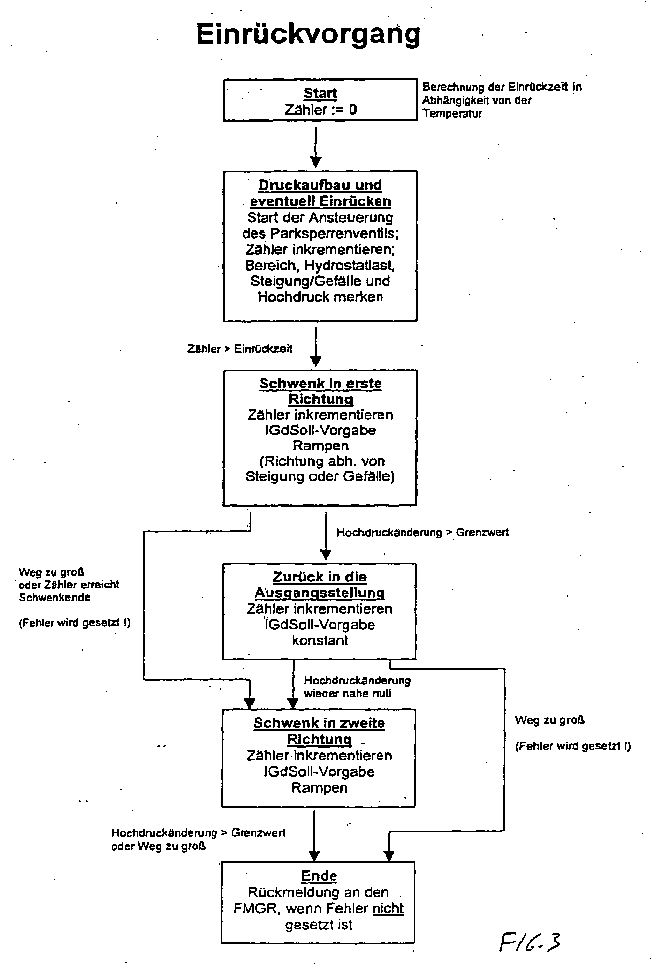

In einer zweiten Phase wird eine Überprüfung des Einrückvorgangs mit dem mit Druck beaufschlagtem (PSE Ausgang des Getriebe-Reglers) Parksperrenventil durchgeführt. Ziel der Überprüfung ist es, durch Verdrehen des Abtriebs nach vor und zurück, der Klinke die Möglichkeit zum Einrasten in das Klinkenrad zu geben. Der Einrückvorgang wird in Fig. 3 dargestellt.

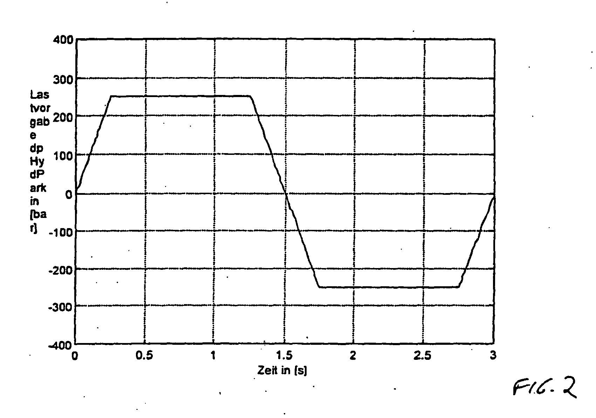

Der Abtrieb wird bewegt, indem eine Abtriebsmomentänderung gemäß Fig. 2, welche die Lastvorgabe als Funktion der Zeit veranschaulicht, vorgegeben wird. Das Vorzeichen dieser Vorgabe hängt immer vom eingelegten Bereich ("V" oder "R") und vom Schub oder Zug des Fahrzeuges ab (Grundlast). Damit ist sichergestellt, dass in jene Richtung begonnen wird, in die es "leichter" geht.

Die Last und damit das Abtriebsmoment wird aus der Differenz zwischen der Schwenkwinkelvorgabe und dem gemessenen Übersetzungsverhältnis iV berechnet. Es ergibt sich, dass sich im Stillstand des Fahrzeuges Antriebsmoment und Lastmoment die Waage halten müssen; das Abtriebsmoment muss die Grundlast abdecken.

Wird jetzt das Abtriebsmoment durch Schwenkwinkelverstellung des Hydrostaten gesteuert, dann wird das Fahrzeug beim Ansteigen der Last-Vorgabe in eine Richtung beschleunigt. Dabei hat die Klinke noch die Möglichkeit einzurasten, wenn sie vorher auf einem Zahn des Klinkenrades gelegen ist. Durch das Einrasten der Klinke kann sich das Fahrzeug nur durch das Spiel in der Parksperre und das Spiel im Getriebe bewegen. Wenn die Parksperre eingerückt ist, nimmt diese die Last auf. Der maximale Weg, den das Fahrzeug dabei zurücklegt, beträgt maximal ca. 1,17 cm und wird bei der Überprüfung gemessen (In Abhängigkeit von der Getriebeausführung kann sich das Spiel verkleinern oder vergrößern). Überschreitet die Differenz zwischen Last-Vorgabe und Grundlast mindestens 200 bar, wird die Last in die andere Richtung aufgebaut, sodass ein Hin- und Herschwenken in der Regel nur ca. 2 s dauert.

Während des Beschleunigungsvorganges wird keine große Last aufgebaut, da erst einmal das Spiel im Getriebe und in der Parksperre aufgebraucht wird. Erst wenn die Klinke in der Lücke eingerastet ist, kann sich eine Last entsprechend der Vorgabe aufbauen. Wenn die Mindestlast nicht erreicht wird oder der Weg für das Einrücken zu groß ist, wird der Einrückvorgang abgebrochen, der PSA Ausgang bestromt, die vor dem Einrücken aktuelle Last eingestellt und ein Fehlerflag (Parksperre nicht einlegbar) gesetzt. Die Motor-Leerlaufdrehzahl wird während des Einrückens auf vorzugsweise ca. 1 000 U/min erhöht, um ein Abwürgen des Motors zu verhindern.

Bei notentriegelter Parksperre wird keine der Lastvorgabe entsprechende Last aufgebaut, da das Fahrzeug frei beschleunigt werden kann. Nachdem der Drehwinkel am Abtrieb 60° überschritten hat, wird das Einrücken abgebrochen, der alte Lastzustand (Stillstand) hergestellt und das Fehlerflag "Parksperre nicht einlegbar" gesetzt.

Nachdem der erste Schwenk in beide Richtungen abgeschlossen ist, wird das Ventil strom- und damit drucklos geschaltet, die Druckabfallzeit (temperaturabhängig) abgewartet und danach derselbe Schwenk ohne Druck gestartet. Dabei wird überprüft, ob die Klinke eingerastet ist.

Es gelten wieder die gleichen Prüfbedingungen wie im ersten Schwenk. Der Hochdruck muss die Grundlast um 200 bar über- bzw. unterschreiten, der maximale Weg darf dabei nicht überschritten werden, und die maximale Zeitdauer darf dabei nicht überschritten werden. Wird eines der Kriterien nicht erfüllt, wird der Schwenk abgebrochen, der PSA - Ausgang des Getriebe-Reglers bestromt, die vor dem Einrücken aktuelle Last eingestellt und ein Fehlerflag (Parksperre nicht einlegbar) gesetzt.

Ist das sichere Einrücken der Parksperre erkannt worden, wird aus Sicherheitsgründen das Ventil über den PSE-Ausgang des Getriebe-Reglers noch einmal für etwa 2,5 s bestromt und der Hydrostat lastfrei gesteuert.

Da der Getriebe-Regler dem FMGR das Einrücken meldet, gibt dieser die Anweisung zu trennen (KV oder KR zu öffnen). Ist die Richtungskupplung ausgerückt, so wird der Hydrostat mit Verzögerung und langsamer Rampe in die Neutralstellung gebracht.

Wurde ein Fehler beim Einrücken festgestellt, so wird dies an den FMGR gesendet, worauf dieser das automatische Einrücken bis zum Abstellen des Fahrzeuges verhindert. Auch ein erneutes Einrücken, ausgelöst vom Parksperrentaster oder durch ein fehlendes Sitzschaltersignal wird unterdrückt, solange der Fehler gesetzt ist, wobei beim Anfahren (bei ungefähr 1,5 km/h) der Fehler wieder gelöscht wird.

Ist die Parksperre eingerückt, dann wird laufend die Abtriebsdrehzahl überwacht. Wenn diese ein Limit überschreitet (∼ 0,25 km/h), dann wird der Fehler "Parksperre hat geöffnet" gesetzt. Der FMGR versucht daraufhin, bei Fahrzeugstillstand die Parksperre selbsttätig wieder einzulegen. Dieser Fehler wird erst beim nächsten erfolgreichen Einrücken gelöscht.

Wird ein Schluß auf Plus des PSE-Ausgangs des Getriebe-Reglers diagnostiziert, dann wird bei einer Fahrzeuggeschwindigkeit über ca. 1 km/h der elektronische Hauptschalter ausgeschaltet, um ein Einlegen und damit ein Ratschen (Abtrieb bewegt sich, Parksperre versucht einzurücken) der Parksperre zu verhindern. Bei Stillstand des Fahrzeugs wird der Hauptschalter wieder eingeschaltet, um nach Notenriegelung der Parksperre das Fahrzeug wieder bewegen zu können.

Ist die Parksperre eingerückt und gibt der FMGR die Anweisung zum Ausrücken, so wird der Ausrückvorgang gestartet. Es gibt zwei Übergänge, durch die die Parksperre ausgerückt werden kann:
a) Der Fahrer tritt das Kupplungspedal: Das Parksperren-Ventil wird sofort angesteuert; dies wird vom Getriebe-Regler erkannt, ein entsprechendes Flag vom FMGR gesetzt bleibt, dass die Richtungskupplungen geöffnet bleiben.
b) Der Fahrer wählt "V" oder "R" vor: Die Parksperre darf erst ausgerückt werden, wenn die Richtungskupplung eingelegt ist, und die alte Hydrostatlast eingestellt wurde.

Die Ausrückzeit wird (entsprechend den Auswertungen in der Kältekammer) temperaturabhängig berechnet. Nach Ablauf dieser Zeit wird dem FMGR das erfolgreiche Ausrücken mitgeteilt.

Beim Ausschalten der Zündung wird die beim letzten Einrücken der Parksperre bestehende Hydrostatlast und der eingelegte Bereich abgespeichert (im EEPROM). Der Zustand der Parksperre wird nicht abgespeichert.

### Bezugszeichen

- 1: Parksperrenventil
- 2: Getriebe-Regler
- 3: Parksperre
- 4: Fahrzeug-Motor-Getriebe-Regler
- 5: CAN-Bus
- 6: Display
- 7: Getriebe

## Patentansprüche

1. Steuerverfahren einer Parksperre eines Nutzfahrzeugs, mit einem hydrostatisch-mechanischen Leistungsverzweigungsgetriebe, **dadurch gekennzeichnet, dass** nach dem Einlegen der Parksperre (3) (Position P) überprüft wird, ob die Parksperre (3) tatsächlich eingelegt ist, wobei, wenn die Parksperre nicht eingelegt ist, das Fahrzeug in Stillstandsregelung bleibt und der Fahrer optisch und/oder akustisch informiert wird, wobei das Einlegen der Parksperre (3) bei einer geschlossenen Richtungskupplung erfolgt.

2. Steuerverfahren nach Anspruch 1, **dadurch gekennzeichnet, dass**, wenn trotz eingelegter Parksperre (3) eine Abtriebszahl festgestellt wird, ein erneuter Einrückvorgang gestartet wird.

3. Steuerverfahren nach Anspruch 1 oder 2, **dadurch gekennzeichnet, dass** die Überprüfung des Einrückvorgangs durch Verdrehen des Abtriebs mit einer definierten Last bzw. Abtriebsmomentänderung in beiden Richtungen erfolgt, wobei, wenn die Last nicht aufgebaut wird, ein Schwellenwert für den dabei zurückgelegten Weg überschritten wird oder eine definierte Zeitschwelle überschritten wird, der Vorgang abgebrochen wird und ein Fehler beim Einrücken der Parksperre (3) erkannt wird.

4. Steuerverfahren nach einem der vorangehenden Ansprüche, **dadurch gekennzeichnet, dass** bei notentriegelter Parksperre (3) keine Last aufgebaut wird, wobei, wenn der Drehwinkel am Abtrieb einen Winkel in der Größenordnung von 60° überschreitet, das Fahrzeug in den Zustand Stillstandsregelung übergeht.

5. Steuerverfahren nach einem der vorangehenden Ansprüche, **dadurch gekennzeichnet, dass** die Parksperrenansteuerung durch einen Getriebe-Regler (2) erfolgt, welcher die Anforderung zum Einlegen bzw. Ausrücken der Parksperre von einem Fahrzeug-Motor-Getriebe-Regler (FMGR) (4) erhält, wobei nach dem Einlegen der Parksperre (3) eine aktuell geschlossene Richtungskupplung geöffnet und der Allradantrieb unabhängig von der Allrad-Schalterstellung geschaltet wird.

6. Steuerverfahren nach einem der vorangehenden Ansprüche, **dadurch gekennzeichnet, dass**, wenn sich das Fahrzeug unterhalb der Grenzgeschwindigkeit in der Größenordnung von 0,25 km/h bewegt, nach einer vorbestimmten Zeit, die Parksperre (3) eingelegt wird, wenn sich der Fahrer vom Sitz erhebt.

7. Steuerverfahren nach einem der vorangehenden Ansprüche, **dadurch gekennzeichnet, dass** bei eingelegter Parksperre (3) bei Vorwahl "V" oder Vorwahl "R" die jeweilige Richtungskupplung eingelegt und die Parksperre ausgerückt wird.

8. Steuerverfahren nach einem der vorangehenden Ansprüche, **dadurch gekennzeichnet, dass** eine Bremsbetätigung ein Rücksetzen eines Zählers bewirkt, welcher bei Stillstandsregelung nach Ablauf einer bestimmten Zeit in der Größenordnung von 45 Sekunden ein automatisches Einrücken der Parksperre einleitet, wobei, wenn die Bremse während eines "P" → "N" → "P"-Überganges betätigt wird, der Einrückvorgang lediglich angehalten wird und beim Verlassen eines Bremspedals von einem Fahrzeug-Motor-Getriebe-Regler (4) unverzüglich ein Einrücken der Parksperre angefordert wird.

9. Steuerverfahren nach einem der vorangehenden Ansprüche, **dadurch gekennzeichnet, dass**, wenn bei Zündung aus keine Rückmeldung von einem Getriebe-Regler (2) über ein gesichertes Einrücken der Parksperre vorliegt, sich ein Fahrzeug-Motor-Getriebe-Regler (4) und ein Display (6) nicht abschalten, wobei der Fahrer optisch und akustisch darauf hingewiesen wird, dass die Parksperre nicht eingelegt ist, wobei der Nachlauf des Fahrzeug-Motor-Getriebe-Reglers (4) und des Displays (6) beendet wird, sobald ein Handbremssignal über die Betätigung einer Handbremse vorliegt oder die Parksperre eingelegt wird.

10. Steuerverfahren nach einem der vorangehenden Ansprüche, **dadurch gekennzeichnet, dass** bei eingerückter Parksperre laufend die Abtriebsdrehzahl überwacht wird, wobei, wenn diese einen vorgegebenen Wert überschreitet, ein Fehler erkannt und gespeichert wird und ein erneuter Einrückvorgang beim nächsten Fahrzeugstillstand durchgeführt wird und wobei der Fehler beim nächsten erfolgreichen Einrücken gelöscht wird.

11. Steuerverfahren nach einem der vorangehenden Ansprüche, **dadurch gekennzeichnet, dass** die Motor-Leerlaufdrehzahl während des Einrückens der Parksperre (3) erhöht wird, um ein Abwürgen des Motors zu verhindern.

## Claims

1. Method of controlling a parking brake of a utility vehicle, having a hydrostatic-mechanical power-branched transmission, **characterized in that**, after the engagement of the parking brake (3) (position P) it is checked whether the parking brake (3) is actually engaged, wherein, if the parking brake is not engaged, the vehicle remains in the stationary control mode and the driver is informed visually and/or acoustically, wherein the engagement of the parking brake (3) takes place when a directional clutch is closed.

2. Control method according to Claim 1, **characterized in that** if an output speed is detected despite the parking brake (3) being engaged, a renewed engagement process is started.

3. Control method according to Claim 1 or 2, **characterized in that** the checking of the engagement process is carried out by turning the output in both directions with a defined load or change in output torque, wherein, if the load is not increased, a threshold value for the travel which is executed in the process or a defined time threshold is exceeded, the process is aborted and a fault is detected when the parking brake (3) engages.

4. Control method according to one of the preceding claims, **characterized in that** in the case of an emergency-released parking brake (3) there is no increase in the load, wherein the vehicle goes into the stationary control mode if the rotational angle at the output exceeds an angle of the order of magnitude of 60°.

5. Control method according to one of the preceding claims, **characterized in that** the actuation of the parking brake is carried out by a transmission controller (2) which receives the request to engage or disengage the parking brake from a vehicle engine transmission controller (FMGR) (4), wherein, after the engagement of the parking brake (3), a currently closed directional clutch is opened and the all-wheel drive is shifted independently of the all-wheel switch position.

6. Control method according to one of the preceding claims, **characterized in that** if the vehicle moves below the limiting speed of the order of magnitude of 0.25 km/h, the parking brake (3) is engaged after a predetermined time if the driver lifts himself up from the seat.

7. Control method according to one of the preceding claims, **characterized in that**, when the parking brake (3) is engaged in the case of a preselection "V" or preselection "R", the respective directional clutch is engaged and the parking brake is disengaged.

8. Control method according to one of the preceding claims, **characterized in that** actuation of the brake brings about resetting of a counter which brings about automatic engagement of the parking brake in the stationary control mode after the expiry of a certain time of the order of magnitude of 45 seconds, wherein, if the brake is activated during a "P" → "N" → "P" changeover, the engagement process is merely stopped, and engagement of the parking brake is requested without delay when the driver's foot is taken off a brake pedal of a vehicle engine transmission controller (4).

9. Control method according to one of the preceding claims, **characterized in that** if there is no feedback from a transmission controller (2) about secure engagement of the parking brake when the ignition is off, a vehicle engine transmission controller (4) and a display (6) are not switched off, wherein the driver is visually and acoustically informed that the parking brake is not engaged, wherein the running on of the vehicle engine transmission controller (4) and of the display (6) is ended as soon as a handbrake signal relating to the activation of a handbrake is present or the parking brake is engaged.

10. Control method according to one of the preceding claims, **characterized in that** when the parking brake is engaged, the output rational speed is monitored continuously, wherein, when this output rotational speed exceeds a predefined value, a fault is detected and stored, and a renewed engagement process is carried out when the vehicle is next in the stationary state, and wherein the fault is deleted when successful engagement next occurs.

11. Control method according to one of the preceding claims, **characterized in that** the engine idling speed is increased during the engagement of the parking brake (3) in order to prevent stalling of the engine.

## Revendications

1. Procédé de commande d'un frein de stationnement pour un véhicule utilitaire, comprenant une transmission à répartition de puissance hydrostatique-mécanique, **caractérisé en ce qu'**après l'enclenchement du frein de stationnement (3) (Position P), on vérifie si le frein de stationnement (3) est effectivement enclenché, et si le frein de stationnement n'est pas enclenché, le véhicule reste réglé en mode d'arrêt, et le conducteur est informé par voie optique et/ou acoustique, l'enclenchement du frein de stationnement (3) s'effectuant lorsqu'un embrayage directionnel est fermé.

2. Procédé de commande selon la revendication 1, **caractérisé en ce que**, lorsque l'on constate un régime de sortie, même si le frein de stationnement (3) est enclenché, une nouvelle opération d'embrayage est amorcée.

3. Procédé de commande selon la revendication 1 ou 2, **caractérisé en ce que** la vérification de l'opération d'embrayage a lieu par rotation de la prise de force avec une charge définie ou une variation de couple de sortie définie dans les deux directions, et si la charge n'est pas réduite, qu'une valeur de seuil pour la course ainsi parcourue est dépassée ou qu'une limite de temps définie est dépassée, l'opération est interrompue et une erreur lors de l'embrayage du frein de stationnement (3) est reconnue.

4. Procédé de commande selon l'une quelconque des revendications précédentes, **caractérisé en ce que** dans le cas d'un déverrouillage d'urgence du frein de stationnement (3), aucune charge n'est réduite et lorsque l'angle de rotation au niveau de la prise de force dépasse un angle de l'ordre de 60°, le véhicule passe à l'état de réglage d'arrêt.

5. Procédé de commande selon l'une quelconque des revendications précédentes, **caractérisé en ce que** la commande du frein de stationnement a lieu par un régulateur de transmission (2), qui exécute l'ordre d'enclenchement ou de débrayage du frein de stationnement depuis un régulateur de transmission de moteur de véhicule (FMGR) (4), et après l'enclenchement du frein de stationnement (3), un embrayage directionnel actuellement fermé est ouvert et la commande toutes roues motrices est commutée indépendamment de la position du commutateur toutes roues motrices.

6. Procédé de commande selon l'une quelconque des revendications précédentes, **caractérisé en ce que** lorsque le véhicule se déplace en dessous de la vitesse limite de l'ordre de grandeur de 0,25 km/h, après un intervalle de temps prédéterminé, le frein de stationnement (3) est enclenché quand le conducteur se lève de son siège.

7. Procédé de commande selon l'une quelconque des revendications précédentes, **caractérisé en ce que** lorsque le frein de stationnement (3) est enclenché, lors de la présélection "V" ou de la présélection "R", l'embrayage directionnel respectif est enclenché et le frein de stationnement est débrayé.

8. Procédé de commande selon l'une quelconque des revendications précédentes, **caractérisé en ce qu'**un actionnement du frein provoque la remise à zéro d'un compteur, qui, lors du réglage à l'arrêt après l'écoulement d'un intervalle de temps prédéterminé de l'ordre de 45 secondes, amorce un embrayage automatique du frein de stationnement, et lorsque le frein est actionné pendant un passage de "P"→"N"→"P", l'opération d'embrayage est seulement mise en attente et une fois que la pédale de frein est relâchée, un embrayage du frein de stationnement est immédiatement demandé par un régulateur de transmission de moteur de véhicule (4).

9. Procédé de commande selon l'une quelconque des revendications précédentes, **caractérisé en ce que** lors de l'allumage, si aucune information en retour d'un régulateur de transmission (2) n'est fournie concernant un embrayage sécurisé du frein de stationnement, un régulateur de transmission de moteur de véhicule (4) et un affichage (6) ne se déconnectent pas, le conducteur étant informé optiquement et acoustiquement du fait que le frein de stationnement n'est pas enclenché, le fonctionnement du régulateur de transmission de moteur de véhicule (4) et de l'affichage (6) s'achevant dès qu'un signal de frein à main est produit du fait de l'actionnement d'un frein à main ou dès que le frein de stationnement est enclenché.

10. Procédé de commande selon l'une quelconque des revendications précédentes, **caractérisé en ce que**, lorsque le frein de stationnement est embrayé, le régime de sortie est surveillé en continu, et s'il dépasse une valeur prédéfinie, une erreur est reconnue et mémorisée, et une nouvelle opération d'embrayage est effectuée lors de l'arrêt subséquent du véhicule, et l'erreur est ensuite effacée lors de la réussite subséquente de l'embrayage.

11. Procédé de commande selon l'une quelconque des revendications précédentes, **caractérisé en ce que** le régime de marche à vide du moteur est augmenté pendant l'embrayage du frein de stationnement (3) afin d'éviter de faire caler le moteur.
